# EUROPÄISCHE PATENTSCHRIFT

(11) **EP 3 455 689 B1**
(45) Veröffentlichungstag und Bekanntmachung des Hinweises auf die Patenterteilung: **11.11.2020**
(21) Anmeldenummer: 17725175.8
(22) Anmeldetag: 02.05.2017
(51) Int. Cl.: G05D 1/02

(54) **VERFAHREN UND SYSTEM ZUR FÜHRUNG VON MECHANISCH GEKOPPELTEN ODER FREI FOLGENDEN ZUG- UND FAHRZEUGVERBÄNDEN OHNE MECHANISCHE SCHIENE**
METHOD AND SYSTEM FOR GUIDING MECHANICALLY COUPLED OR FREELY FOLLOWING TRAIN AND VEHICLE COMBINATIONS WITHOUT A MECHANICAL RAIL
PROCÉDÉ ET SYSTÈME POUR GUIDER DES CONVOIS FERROVIAIRES ET DES RAMES DE VÉHICULES QUI SONT ACCOUPLÉS MÉCANIQUEMENT OU SE SUIVENT LIBREMENT SANS RAILS MÉCANIQUES

(30) Priorität: 11.05.2016 DE 102016005998
(43) Veröffentlichungstag der Anmeldung: 20.03.2019
(73) Patentinhaber: Müller, Christoph, 49492 Westerkappeln (DE)
(72) Erfinder: Müller, Christoph, 49492 Westerkappeln (DE)
(74) Vertreter: Weeg, Thomas
(86) Internationale Anmeldenummer: PCT/EP2017/060409
(87) Internationale Veröffentlichungsnummer: WO 2017/194353

(56) Entgegenhaltungen:
- EP-A1- 2 335 791
- JP-A- 2001 006 099
- US-A1- 2013 030 606
- US-B1- 6 313 758
- Ottmar Gehring: "Automatische Längs-und Quer uhrung einer Lastkraftwagenkolonne", , 11. Dezember 2000 (2000-12-11), Seiten 1-235, XP055401901, Stuttgart, Germany Gefunden im Internet: URL:https://www.deutsche-digitale-biblioth ek.de/binary/D6JR2OJM7RFO3SHVTNLGBX5E3RJ47 IJC/full/1.pdf [gefunden am 2017-08-29]

## Beschreibung

### Einführung

Die vorliegende Erfindung bezieht sich auf ein Verfahren und ein System zum spurtreuen Betrieb eines Fahrzeugverbandes bestehend aus zwei oder mehr mechanisch gekoppelten einzeln oder gemeinsam angetriebenen Fahrzeugen nach den Merkmalen der Oberbegriffe der Ansprüche 1 und 4.

In vielfältigen Einsatzbereichen (Straßenbahnen, Versorgungszüge im Berg- und Tunnelbau, Materialtransport in Industrieunternehmen) sind heute derartige Zugverbände im Einsatz, die alle für den Betrieb auf mechanische Spurführungselemente ("Schienen") angewiesen sind.

Diese Systeme haben den technologischen Nachteil, dass das Schienennetz mit hohen Investitionskosten gebaut und aufwendig instand gehalten werden muss. Auch sind die Fahrzeuge zum Betrieb auf diese Infrastruktur angewiesen.

Ein weiterer Nachteil ist die Begrenzung der Steigungs- und Gefällestrecken des Rad-Schiene-Systems, so dass große Steigungen nur mit zusätzlichen Traktionshilfen überwunden werden können.

In vielen Fällen ist das Gleisbett auch ein zusätzliches Hindernis für den gleichzeitigen Betrieb von regulären Fahrzeugen (z. B. im Tunnel).

Mit modernen elektronischen Hilfsmitteln können Züge geführt werden, die als normale Radfahrzeuge ausgeführt sind. Im Buch von Ottmar Gehring "Automatische Längs- und Querführung einer Lastkraftwagenkolonne", erschienen 11.12.2000 in Stuttgart, Deutschland, wird im Kapitel 6.1 ab S. 127 eine Querregelung einer Fahrzeugkolonne beschrieben, die nach dem Deichselprinzip arbeitet. Damit ist gemeint, dass frei aufeinander folgende Fahrzeuge sich am vorausfahrenden Fahrzeug orientieren. Einer mechanischen Spurführung, wie sie ein Schienensystem bietet, entspricht dieses System nicht.

Weitere Lenkungen von Fahrzeugverbänden lassen sich den Schriften US 6,313,758 B1, US 2013/030606 A1, JP 2001 006099 A und EP 2 335 791 A1 entnehmen, wobei die letzte Schrift einen gattungsgemäßen Fahrzeugverband zeigt.

### Aufgabe der Erfindung

Es ist die Aufgabe der vorliegenden Erfindung, das gattungsgemäße Verfahren und System so zu verbessern, dass auf mechanische Spurführungselemente verzichtet werden kann.

### Lösung der Aufgabe

Die Aufgabe wird für ein gattungsgemäßes Verfahren durch die kennzeichnenden Merkmale des Anspruchs 1 gelöst. Die Aufgabe wird für ein gattungsgemäßes System durch die kennzeichnenden Merkmale des Anspruchs 4 gelöst.

Einzelne Achsen von Zügen oder Kombinationen von aufeinander folgenden Einzelfahrzeugen werden elektronisch derart gesteuert, dass alle Achsen der ersten Achse spurtreu folgen. Damit kann auf eine mechanische Spurführung (Gleis) verzichtet werden.

Die automatische Steuerung der Folgeachsen wird durch die Winkelstellungen der Führungsachse sowie der Winkel zwischen den Fahrzeugen zusammen mit der Fahrzeuggeometrie bestimmt. Zur Steuerung der Folgeachsen wird eine elektronische Karte verwendet, welche rechnerbasiert am Fahrzeug entlanggeführt und damit die Sollpositionen der Spur der Folgeachsen bestimmt.

Nach einer Ausgestaltung der Erfindung wird zur automatischen Steuerung aller Achsen von Führungs- und Folgefahrzeugen absolute Positionssensorik (GPS oder Funkortung) zum Abgleich mit einer Karte verwendet.

Nach einer Ausführung der Erfindung wird die Genauigkeit der Führung der Folgeachsen durch am Fahrzeug angebrachte Sensoren (Ultraschall, Laser, Laserscanner, Radarscanner etc.) in Kombination mit natürlichen oder künstlichen Führungselementen erhöht.

Nach einer Ausgestaltung der Erfindung wird die Position des Fahrzeugverbandes oder einzelner Fahrzeuge durch elektronische Sensoren, vorzugsweise Laserscanner, Radarscanner, GPS, D-GPS oder Funknavigation mit der Soll-Position der Fahrspur abgeglichen.

Nach einer Ausführung der Erfindung erfolgt die Steuerung der Folgefahrzeuge und der Führungsachse durch ein zentrales Steuerungssystem oder durch elektronisch vernetzte Einzelsteuerungen.

Nach einer Ausgestaltung der Erfindung wird die spurgenaue elektronische Steuerung der Folgeachsen durch die Winkelstellungen der Führungsachse sowie durch die Winkel zwischen den Fahrzeugen zusammen mit der Fahrzeuggeometrie bestimmt.

Nach einer Ausgestaltung der Erfindung wird die Genauigkeit der Führung der Folgeachsen durch seitlich am Fahrzeug angebrachte Sensoren erhöht.

Nach einer Ausgestaltung der Erfindung wird zur Steuerung der Folgeachsen eine elektronische Karte verwendet, welche in einem oder verteilt über mehrere Rechner am Fahrzeug entlanggeführt und damit die Sollpositionen der Spur der Folgeachsen bestimmt.

Nach einer Ausgestaltung der Erfindung wird die Regelung der Fahrgeschwindigkeit der Einzelantriebe der Wagen über den Auszug oder die Kräfte eines Puffers zwischen den Wagen vorgenommen.

Es wird ausdrücklich darauf hingewiesen, dass die vorstehend beschriebenen Ausgestaltungen der Erfindung jeweils für sich, aber auch in beliebigen Kombinationen untereinander mit dem Gegenstand des Hauptanspruchs kombiniert werden können, soweit dem keine technisch zwingenden Hindernisse entgegen stehen.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher erläutert werden. Es zeigen:
- Figur 1:: Beispiele verschiedener Zugausführungen,
- Figur 2:: Sensoren an allen Folgefahrzeugen,
- Figur 3:: Sensoren an Führungsfahrzeugen in Fahrtrichtung vorn,
- Figur 4:: eine logische Ausführungsform eines Systems,
- Figur 5:: eine mögliche Systemverteilung auf dem Zug, und
- Figur 6:: Teil A beispielhafte Elemente, die zum Ablauf des Verfahrens verwendet werden, und Teil B die Vorbeifahrt an den Orientierungselementen in dieser beispielhaften Ausführungsvariante.

### Verfahrens- und Systembeschreibung

### Verfahren

Ein Zug besteht aus einer *Führungsachse,* welche als erste Achse in Fahrtrichtung definiert ist. Dieser Führungsachse folgt eine beliebige Anzahl von weiteren Achsen ("*Folgeachsen*") an verschiedenen mechanisch gekoppelten Fahrzeugen.

Eine Mehrzahl oder alle Achsen des gesamten Fahrzeugverbandes sind aktiv gelenkt. Als Fahrzeug im Fahrzeugverband gelten auch Fahrzeugteile, welche dergestalt mit den anderen Fahrzeugteilen im Verband verbunden sind, dass sie bei Auflösung des Verbandes keine einzeln fahrfähige Einheit darstellen. Dazu zählen z. B. Sattelauflieger und ähnliche Konstruktionen sowie über Drehteller verbunden Einheiten wie z. B. in Straßenbahnen oder Gelenkbussen.

Die Fahrzeuge sind mechanisch miteinander verbunden und folgen einander auf derselben Spur.

Der Antrieb kann auf einem oder mehreren Fahrzeugen angeordnet sein. Eine oder mehrere Achsen des Fahrzeugverbandes sind angetrieben.

### Spurführung der ersten Achse des Zuges

Die Führungsachse wird aktiv gelenkt, wobei die Lenkbefehle entweder manuell vom Fahrer des Zuges oder automatisch von einer elektronischen Steuerung erteilt werden.

Die manuelle Lenkung erfolgt traditionell durch den Fahrer, wobei dieser entweder ein traditionelles Lenkrad verwendet, um die Hydraulik direkt anzusteuern. Alternativ wird ein elektronisches Element verwendet (z. B. Joystick), um die Lenkbefehle zu erteilen.

Die Position der ersten Achse im Verhältnis zum Fahrweg wird zur Führung der Folgeachsen (s.u.) benötigt, sie definiert damit die Lage der "virtuellen Schiene", auf der alle Achsen der ersten Achse folgen. Die Position der ersten Achse in der Fahrumgebung muss somit elektronisch erfasst werden. Dies erfolgt entweder relativ mit Distanzmessungen von den Sensoren am Fahrzeug (Nr. 201-205) und/oder als absolute Position in externen Koordinaten (z. B. GPS) von einem oder mehreren Empfängern am Fahrzeug (Nr. 206) ermittelt. Optional geht zusätzlich die Messung des Lenkwinkels der ersten Achse (221) in die Berechnung der durch die Lenkung bestimmten Lage der "virtuellen Schiene" ein.

Im automatischen Fahrbetrieb wird die Position der Führungsachse über einen Führungsrechner (303) elektronisch gelenkt. Dabei wird die Fahrtrichtung vorzugsweise durch Inertialsensorik (207) ermittelt. Falls diese verwendet wird, so wird sie gestützt durch verschiedene andere Sensorsysteme (201 - 206), die optional auch ohne Inertialsensorik eingesetzt werden können: Dabei handelt es sich entweder über eine absolute Positionsermittlung z. B. per Funknaviation (206) (vorzugsweise aber nicht ausschließlich GPS) und/oder relativ mit Sensoren am und vor dem Fahrzeug (201-205), welche die Umgebung nach externen Spurführungselementen (Reflektoren, Straßenschluchten, Tunnelwände etc. abtasten. Aus der Abtastung der Umgebung ergibt sich z. B. durch Triangulation oder Trilateration eine Position des Fahrzeuges relativ zu seiner Umgebung an seiner derzeitigen Position. Einige dieser Sensoren (201-205) werden optional gleichzeitig auch verwendet, um die absolute Geschwindigkeit des Fahrzeuges hochgenau zu ermitteln, wie z. B. per Funk/GPS (206) oder über die relative Bewegung des Fahrzeuges auf feststehende Landmarken mit Laser- oder Radarsensoren (201-205). Dabei kann die Ermittlung der Geschwindigkeit im Sensor selbst oder im Führungsrechner (303) erfolgen.

Zur Bestimmung der Position des Fahrzeuges in der Umgebung werden Fahrwegdaten (302) benötigt, welche die Soll-Parameter für den Betrieb des Zuges auf einem bestimmten Abschnitt der Fahrtstrecke enthalten. Diese Fahrwegdaten (302) können fest im Programm oder flexibel als Parameter für einen bestimmten Streckenabschnitt vorgegeben sein. In homogenen Fahrumgebungen (z. B. Tunnel oder abgesperrte Bereiche), in denen natürliche Fahrwegbegrenzungen oder feste Führungselemente vorhanden sind, reichen diese Parameter für den Betrieb aus. Der Fahrer wählt dann manuell den jeweils gültigen Streckenabschnitt aus. Dabei sind die Umschaltpunkte beispielsweise durch Schilder am Fahrweg markiert oder es erfolgt eine automatische Umschalten z. B. an Stellen, die durch RFID-Tags elektronisch markiert sind.

Alternativ wird eine vollelektronische Karte (301) verwendet, die fest auf dem Führungsrechner programmiert ist, oder von außen dynamisch auf den Führungsrechner geladen werden kann. Die Karte kann auf allgemein verfügbarem, freien oder kommerziellem elektronischem Kartenmaterial basieren oder vom Fahrzeug selbst z. B. während einer manuellen Lernfahrt, automatisch erstellt und während dem Regelbetrieb permanent automatisch aktualisiert werden. Die Karte enthält beispielsweise die Umgebungskoordinaten, die Lage und Ausrichtung des Fahrweges in der Umgebung, Abstände und Winkel des Fahrweges, die Fahrtrichtung sowie die Positionen markanter Punkte der Umgebung sowie die genauen Standorte aller externen Navigationshilfen, GPS-Positionen etc.

Der Führungsrechner auf dem Fahrzeug (303) vergleicht permanent die Position und Geschwindigkeit des Zuges mit den für die aktuelle Position gültigen Fahrwegdaten (302). Fahrwegdaten zur Führung des Zuges sind z. B.:
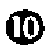 Lage des Fahrweges auf der zur Verfügung stehenden Fläche, bei Verwendung einer elektronischen Karte ist dies z. B. der Fahrweg auf der elektronischen Karte.
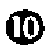 Der seitliche Abstand zu einem natürlichen oder künstlich angebrachten aktiven oder passiven Führungselement (Leitplanke, Tunnelwand, Relektoren, Funkmasten).
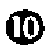 Relative Positionen in einer früher von den Sensoren aufgezeichneten elektronischen Karte
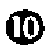 Absolute Positionskoordinaten in einem globalen oder lokalen Koordinatensystem
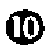 Höchstgeschwindigkeiten
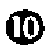 Neigungen des Fahrweges (Steigung, Gefälle) etc.

Diese und weitere Fahrwegdaten können einzeln oder in beliebiger Kombination zur Führung des Zuges verwendet werden. Die Position des Fahrzeugs relativ zu den Führungselementen und/oder die absolute Fahrzeugposition werden optional auf einem Fahrerdisplay angezeigt.

Aus dem Positionsvergleich im Führungsrechner (303) ergeben sich mit Hilfe von bekannten Algorithmen der Regeltechnik wie z. B. PI, PID Regler oder auch z. B. Kalman-Filter die Steuerbefehle für die Lenkung (20) und für die Traktion (30).

### Spurführung der Folgeachsen des Zuges

Basierend auf der Position der ersten Achse wird unter Zuhilfenahme des Lenkwinkels (221) im Führungsrechner (303) eine lokale elektronische Karte erstellt, welche während der Fahrt am Zug entlanggeführt wird. Aus dieser elektronischen Karte ("virtuelle Schiene") ergeben sich unter Zuhilfenahme der individuellen Fahrzeuggeometrien die Lenkwinkel der Folgeachsen, so dass diese immer genau in der Spur der ersten Achse laufen.

In Abhängigkeit der Fahrzeuggeometrie und der benötigten Genauigkeit der Spurtreue sind mehrere oder alle Folgeachsen des Zuges als Lenkachsen ausgeführt, die elektronisch gesteuert werden. Damit folgen sie präzise und mit einer minimalen Abweichung der Spur der ersten Achse, so als würden sie geführt von einer mechanischen Schiene der ersten Achse nachlaufen.

Um dies zu erreichen sind alle Lenkachsen mit Lenkwinkelsensoren ausgerüstet, die den jeweiligen Lenkwinkel an einen Fahrzeugrechner (401-403) übermitteln. Ein Fahrzeugrechner übernimmt die unabhängige lokale Steuerung eines einzelnen Fahrzeuges im Zugverband. Alternativ kann diese Funktion insbesondere bei kleineren Zugverbänden auch von einem zentralen Rechner (z. B. 303) wahrgenommen werden.

Hinzu kommen bei mechanisch verbundenen Fahrzeugen ein oder mehrere Sensoren in den Fahrzeugkupplungen (210 und 211 bzw. bei Gelenkfahrzeugen nur einer dieser Sensoren).

Da die Lenk- und Fahrzeugwinkelmessungen insbesondere bei einem langen Zugverband und bei mechanischem Spiel nicht genau genug sind um eine schienengleiche Führung spurgenau sicherzustellen, sind vorzugsweise an den einzelnen Fahrzeugen Seitensensoren und/oder Positionssensoren (201, 202, 203, 204) angebracht, welche die Fahrzeugposition und die spurbezogene Ausrichtung der Fahrzeuge messen. Die gemessenen Abweichungen werden dann über die Lenkung der Einzelachsen in Relation zur Soll-Spur korrigiert.

Die Seitensensoren (201, 202, 203, 204) können beispielsweise als Laserscanner, Radarscanner, oder als einfache Laser- oder Ultraschall-Distanzsensoren in beliebiger Kombination und Anordnung ausgeführt sein. Auch können z. B. Differential-GPS-Empfänger (206) oder andere Verfahren der absoluten Positionierung z. B. über Funktrilateration oder Triangulation auf den einzelnen Fahrzeugen verwendet werden.

Zur Steuerung der Lenkachsen wird die an der Führungsachse gemessene Position der Führungsachse in der Fahrumgebung während der Fahrt in eine elektronische Karte eingetragen, die dann am Zug entlanggeführt wird. Auf dieser "virtuellen Schiene" fahren alle folgenden Achsen: Alle folgenden Achsen werden auf Grundlage dieser "Karte" gelenkt unter Zuhilfenahme von einem oder einer Mehrzahl der folgenden Sensorwerte:
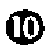 Lenkwinkel,
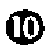 Fahrzeugabmessungen (wie z. B. Länge und Radstand)
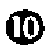 Winkel in der (den) Kupplung(en) zwischen den Fahrzeugen
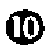 Länge der Kupplungsstange
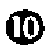 Ausfahrlänge des Puffers in der Kupplung (falls vorhanden)
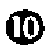 Abstände der Fahrzeugsensoren zu ggf. vorhandenen Führungselementen am Fahrweg
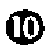 Absolute Position des einzelnen Fahrzeuges und/oder absolute Positionen von Fahrzeugfront und Fahrzeugheck sowie daraus resultierend der Winkel zum Soll-Fahrweg (z. B. von Funk- oder GPS-Empfänger

Damit wird jede Achse elektronisch so gelenkt, dass sie bei Eintreffen an jeder Streckenposition genau in der Spur der ersten Achse läuft. Dieses Verfahren wird auf alle Achsen des Zuges angewendet und somit laufen alle Achsen in derselben Spur auf einer "virtuellen Schiene".

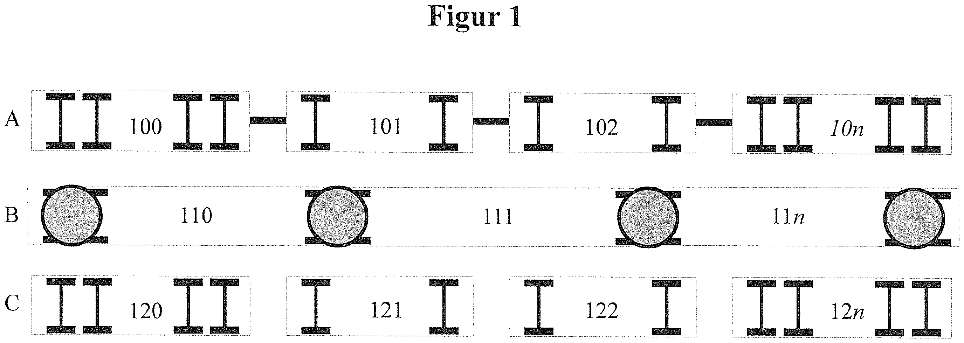

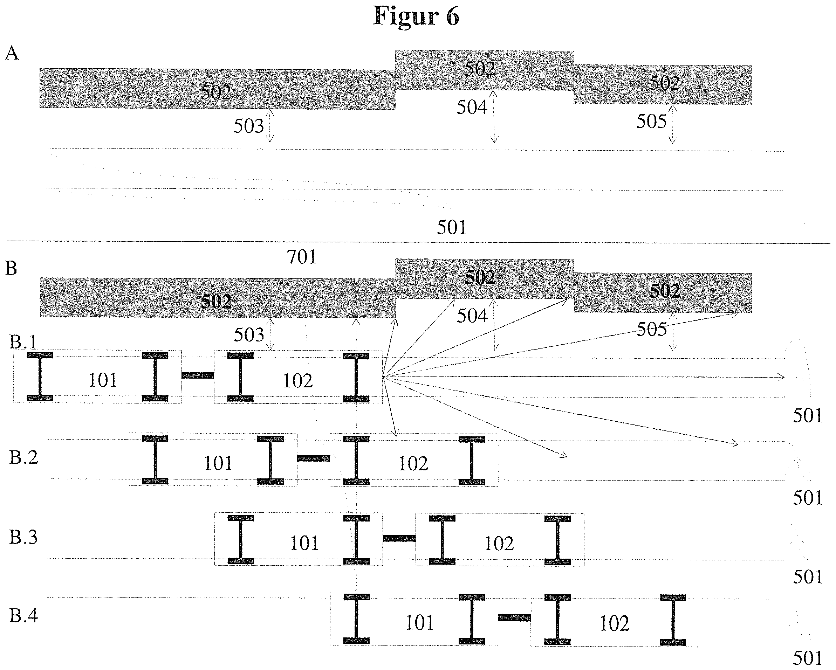

Das folgende Beispiel erläutert eine mögliche, aber nicht ausschließliche Ausführungsform des Verfahrens:
Die beabsichtigte Fahrstrecke ("Lage der virtuellen Schiene"), 501 in den Abbildungen (Figur 1-6), ist vorgegeben durch eine elektronische Karte und/oder durch die Abstände zu künstlichen oder natürlichen Führungselementen (502). Im Beispiel Figur 6A sind verschiedene Abstände gekennzeichnet mit 503, 504 und 505.

Fährt ein Zug auf dieser Strecke entlang, so wird seine Position auf der Strecke mit einem oder einer Mehrzahl der Sensoren 201, 202, 203, 204, 205, 206, 207 erfasst. Daraus ergibt sich entweder eine absolute Position des Fahrzeuges auf der elektronischen Karte (Sensor(en) 206) und/oder die Position des Fahrzeuges relativ zu seiner Fahrumgebung, wie erfasst z. B. durch die Sensoren 201, 202, 203, 204, 205.

Dabei ist es vorteilhaft, aber - z. B. bei der manuellen Lenkung der Führungsachse - nicht zwingend erforderlich, dass einige der Sensoren (205) den Bereich vor dem Fahrzeug abtasten, so dass die Umgebung in Fahrtrichtung bereits vor dem Fahrzeug abgetastet wird und z. B. mit Algorithmen des *"Simultaneous Localization And Mapping"* (SLAM) die Position und Orientierung des Fahrzeuges relativ zur Umgebung und ggf. auch im Vergleich zu der elektronischen Karte ermittelt werden kann.

Aus diesem Vergleich leiten sich durch bekannte Algorithmen der Steuer- und Regeltechnik die Lenkwinkel der ersten Achse ab, so dass diese im automatischen Fahrmodus genau der z. B. in der elektronischen Karte oder für den Streckenabschnitt vorgegebenen Spur folgen kann.

Die Folgeachsen werden nun genau auf der Spur der ersten Achse geführt:
Dazu muss zunächst eine genaue Messung der Fahrstrecke erfolgen. Dies erfolgt mit Hilfe eines oder mehreren - vorzugsweise an nicht angetriebenen Achsen angebrachten Odometern und/oder indirekt über die aus den Positionsmessungen der Sensoren resultierende Streckenmessung, z. B. aus der Funknavigation (206) oder aus den Daten von Radar- oder Lasersensorik (205).

Unter Zuhilfenahme der Lenkwinkel (221), der Kupplungswinkel (210, 211) und der Ausfahrlänge eines ggf. vorhandenen Puffers zwischen den Fahrzeugen sowie der weiteren Sensorik auf den Fahrzeugen, welche die Spurabweichung messen (201-204, 206) lässt sich mit bekannten Algorithmen der Steuer- und Regeltechnik (z. B. Regler, Kalman-Filter etc.) der Lenkwinkel der Folgeachsen ermitteln, so dass diese Folgeachsen genau der Spur der ersten Achse folgen.

Dieses Beispiel gilt sowohl für die Geradeausfahrt wie auch für beliebige Kurvenfahrten.

### System

Das System ist ausgelegt auf verschiedenste Zusammenstellungen von Fahrzeugkombinationen und unterschiedlichste Arten von Fahrzeugkopplungen. Figur 1A und Figur 1B zeigen zwei Beispiele für unterschiedliche Fahrzeugaufbauten.

Das System funktioniert mit unterschiedlichen Lenksystemen (Drehschemellenkung, Achsschenkellenkung etc.). Es kann sich um Wendefahrzeuge mit Fahrerstand an beiden Zugenden wie auch um unidirektional fahrbare Fahrzeugverbände handeln.

Werden Zugstangen als Verbindungselemente verwendet, so können diese entweder starr oder als Puffer ausgeführt sein. Wenn insbesondere bei einem Zugverband mit einzeln angetriebenen Fahrzeugen Zugstangen mit longitudinalem Puffer verwendet werden, so dient die Messung der Auszugslänge des Puffers zur Steuerung der Geschwindigkeit des nachfolgenden Fahrzeuges. Damit sorgt der Puffer zusammen mit der Geschwindigkeitsregelung gleichzeitig dafür, dass in Kurvenfahrten Querkräfte minimiert werden, welche ansonsten die Spurtreue beeinflussen können. Alternativ können Kraftmessungen in den Verbindungsbolzen oder an den Kupplungsstangen diesen Zweck erfüllen.

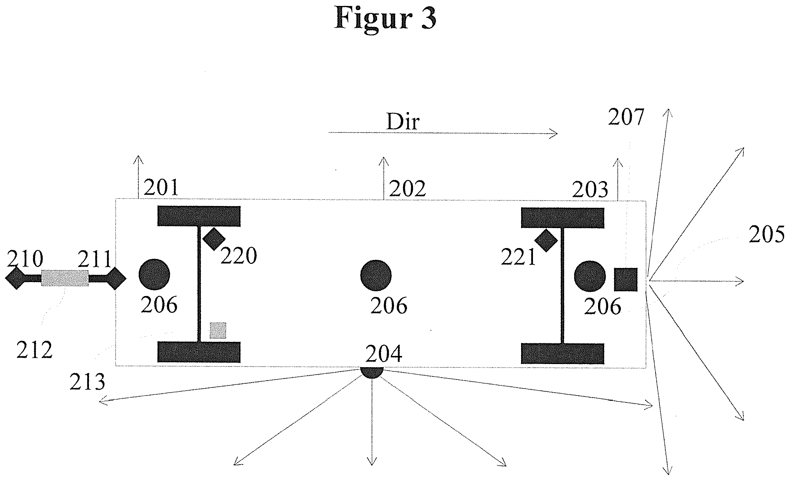

Die sensorische Ausrüstung des Führungsfahrzeuges zum automatischen Lenken der Führungsachse besteht beispielsweise aus den folgenden Sensoren, die einzeln oder in Kombination verwendet werden können (s. auch Figur 3 und Erklärungen zu dieser Abbildung):
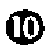 Erkennungssensorik für den Fahrbereich bestehend aus einem oder einer Kombination von Sensoren wie z. B. Laserscanner, Radarscanner, Ultraschallsensorik, Entfernungsmessgeräte oder Bilderkennungsysteme (z. B. Video- oder Infrarotkamera(s) in Fahrtrichtung (205)
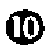 Inertialsensorik (Gyroskope) (207)
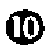 GPS oder Differential-GPS (DGPS) (206)
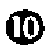 Funkortungssensoren (206)

Diese Sensoren können unabhängig von einer externen Infrastruktur arbeiten oder auch auf externe Hilfsmittel wie z. B. Differential-GPS-Sender, Feststationen zur Funkortung, Reflektoren. Leitplanken, Induktionsschleifen etc. zurückgreifen.

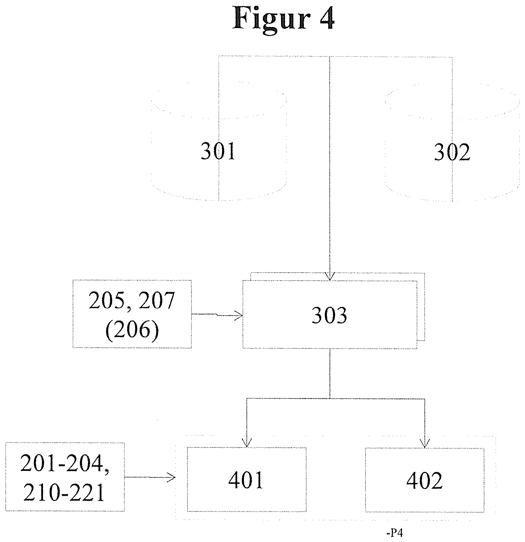

Die Sensorausrüstung zur Lenkung der Folgeachsen wird auf jedem Fahrzeug - d. h. sowohl auf dem Führungsfahrzeug als auch auf Folgefahrzeugen benötigt (Fig. 3 und Fig. 4). Diese besteht aus:
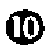 Lenkwinkelsensoren (220) an den die Fahrtrichtung bestimmenden Teilen wie z. B. an jedem Rad, jeder Achse oder an jedem Drehgestell
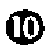 Messung der Winkel zwischen den Fahrzeugen, z. B. entweder im Drehpunkt oder in beiden Drehpunkten einer Zugstange (210, 211) oder als Scanner.
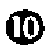 Seitensensoren, entweder ausgeführt als Scanner (204) oder als orthogonale Entfernungsmesser z. B. in Form von Laser- oder Ultraschall sowie Radardistanzsensoren (201, 202, 203).

Bei Anwendungen im Freifeld kann die mehrfache Verwendung z. B. von externen Ortungssystemen (206) wie z. B. DGPS oder RTK-GPS-Empfängern vorn und hinten am Fahrzeug auch zur Ermittlung der Spurposition des Fahrzeuges dienen.

Bei mechanisch gekoppelten Fahrzeugen mit individuellem Antrieb muss ggf. die Traktion jedes Wagens einzeln geregelt werden. Dazu wird vorzugsweise ein mechanischer Puffer zwischen den Wagen verwendet. Dieser kann beispielsweise als Hydraulikzylinder in der Kupplungsstange ausgeführt sein, wobei dann ein Längensensor (212) entweder im Zylinder oder außen angebaut die Ausfahrzustand des Puffers ermittelt.

Das System zur spurtreuen Steuerung des Fahrzeugverbandes besteht vorzugsweise aus Fahrzeugrechnern auf jedem Fahrzeug zur unabhängigen lokalen Ansteuerung der Lenkachsen sowie der übrigen Fahrzeugfunktionen und einem zentralen und ggf. redundant ausgelegten Führungsrechner. Alternativ kann auch der gesamte Fahrzeugverband von einem einzigen Zentralrechner aus gesteuert werden. Werden mehrere Rechner entlang des gesamten Fahrzeugverbandes verwendet, so sind diese drahtlos, drahtgebunden oder per faseroptischem Kabel miteinander vernetzt.

Logisch ist das System aufgeteilt in die Führung der ersten Achse einerseits sowie die elektronische Lenkung der Folgeachsen andererseits. Diese Funktionen sind aufgeteilt auf den Fahrzeug- und die Führungsrechner oder laufen zusammen auf einem zentralen Rechner.

**Die Führung der ersten Achse** erfolgt entweder manuell, wobei die Lenkung sowohl direkt hydraulisch als auch elektronisch gesteuert erfolgen kann. Alternativ wird die erste Achse gemäß oben beschriebenem Verfahren automatisch gesteuert und damit entweder an Führungselementen oder auf der Grundlage einer elektronischen Karte (301) an der Fahrstrecke entlanggeführt. Diese Steuerung erfolgt mit Hilfe eines Rechners, "Führungsrechner" genannt (303). Dieser kann ein selbstständiger Rechner sein, oder er ist in die anderweitige Rechen- und Steuerungstechnik integriert.

An den Führungsrechner sind direkt oder indirekt verschiedene Sensoren für die absolute und/oder relative Navigation angeschlossen, welche den Raum vor dem Fahrzeug sensorisch erfassen (205, 207). Dabei kann es sich z. B. um Laserscanner, Radarscanner oder Radarsensoren handeln. Hinzu kommt ggf. Sensorik, welche die absolute Position des Zuges und/oder seiner Einzelfahrzeuge in einem Koordinatensystem oder in einer Karte sensorisch erfasst (206). Diese können z. B. als DGPS-, RTK-GPS Empfänger oder als Funkortungsempfänger ausgeführt sein. Zusätzlich wird ggf. Inertialsensorik zur Führung verwendet (207), welche durch die übrigen Sensoren gestützt wird.

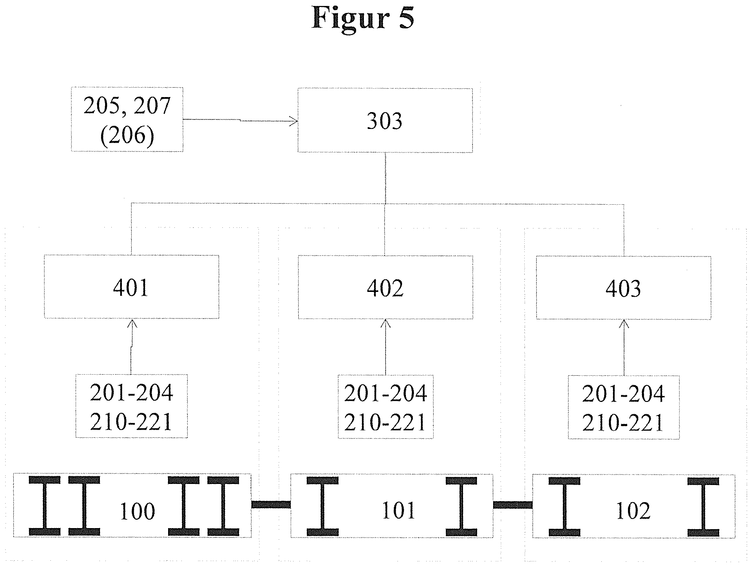

Das System zur spurtreuen Lenkung der Folgeachsen (Fig. 5) besteht aus einer oder mehreren elektronischen Steuerungen, ausgeführt z. B. als Embedded Computer, SPS oder Sicherheitssteuerung sowie den Winkelsensoren für Lenkung und Fahrzeugverbindungen

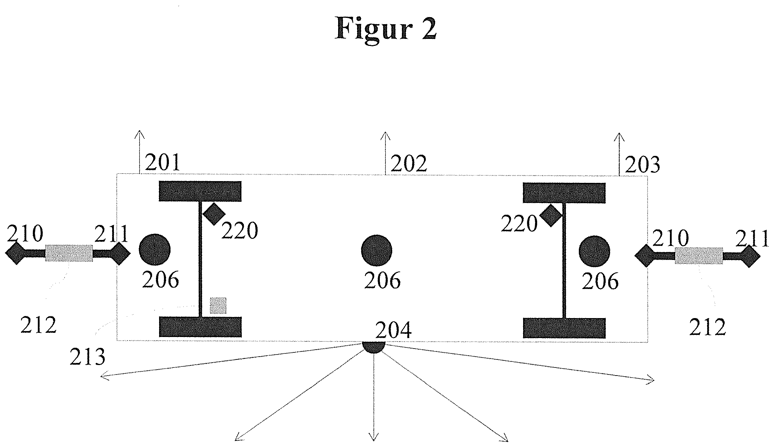

Front- und/oder Seitensensoren (Nr. 1-5 in Fig. 2 und Fig. 3) sind die Eingangswerte zur Korrektur der Spurführung entlang des Zuges. Daneben stellen diesen Sensoren sicher, dass der Sicherheitsabstand zu seitlichen Führungselementen (Leitplanken oder Tunnelwand) eingehalten wird.

Das System besteht aus der Rechentechnik, der angeschlossenen lokalen Peripherie und den Netzwerkverbindungen zwischen den lokalen Einheiten und Zentralsystemen.

### Erläuterung der Abbildungen

### Figur 1: Beispiele verschiedener Zugausführungen

Die Abbildung zeigt beispielhaft unterschiedliche Ausführungen von Zügen und Fahrzeugkupplungen, die mit dem erfindungsgemäßen System gesteuert werden können:
A: Mit Kupplungsstangen verbundene Einzelfahrzeuge (100-10n), wobei die Kupplungsstangen am Fahrzeugkörper oder als Zugdeichseln an möglichen Drehgestellen der Räder angebracht sein können.
B: Drehgestelle unter den Wagenenden, wobei das Drehgestell frei drehend oder an einer Fahrzeugseite fest angebracht werden kann. Auch sogenannte Jakobs-Drehgestelle sind hiermit erfasst.

Darüber hinaus sind Kombinationen der Zugvarianten (z. B. Kupplungsstange oder Deichsel an einem Drehgestell) sowie andere Arten der mechanischen Kupplung der Einzelfahrzeuge möglich.

### Figur 2: Sensoren an allen Folgefahrzeugen

Die Abbildung zeigt die sensorische Ausrüstung eines Führungsfahrzeuges mit den folgenden Sensoren oder Sensorgruppen:
**201, 202, 203** Distanzsensoren zur Seite, angeordnet orthogonal zum Fahrzeug oder in einem beliebigen Winkel. Ausgeführt z. B. als Laser-Distanzsensoren, Ultraschall oder Radarsensoren.
**204** Alternative Ausführungsform der Seitensensoren 201, 202 und 203 als Scanner z. B. in Form von Laser- oder Radarscanner
**206** Absolute Positionssensoren ausgeführt z. B. als GPS, DGPS, RTK-GPS oder Funknavigationsempfänger, entweder als Einzelsensoren oder als Mehrfachsensoren z. B. an der Front und am Heck des Fahrzeuges, um aus der Positionsdifferenz die Orientierung ermitteln zu können.
**210, 211** Winkelsensoren, um den Winkel der Fahrzeuge im Zugverband zueinander z. B. in der Deichsel oder Wagenverbindung ermitteln zu können. Diese können z. B. als Drehgeber (Encoder) ausgeführt sein.
**212** Auszugssensor im Puffer der Deichsel oder Wagenverbindung, um Traktionsdifferenzen der Antriebe der einzelnen Wagen erkennen und gezielt ausgleichen zu können. Die Ausführung kann z. B. als Seilsensor oder als eingebauter Längensensor in einem Hydraulikzylinder erfolgen.
**213** Odometer, vorzugsweise an einer nicht angetriebenen Achse zur Ermittlung der Wegstrecke und ggf. zur Errechnung der individuellen Fahrzeuggeschwindigkeit.
**220** Lenkwinkelsensoren zur Ermittlung des Lenkausschlages der Räder oder des Drehgestells. Ausgeführt z. B. als Drehgeber (Encoder)

### Figur 3: Sensoren an Führungsfahrzeugen in Fahrtrichtung vorn

Alle Führungsfahrzeuge, die in Fahrtrichtung vorn fahren, sind mit allen Sensoren der Folgefahrzeuge ausgerüstet, wie sie unter Abbildung 2 beschrieben sind. Zusätzlich sind alle oder eine Auswahl folgender Sensoren vorhanden:
**205** Sensor zur Ermittlung der Fahrstrecke vor dem Fahrzeug. Die Ausführung kann erfolgen als z. B. Laserscanner, Radarscanner oder Bildsensor (z. B. Videokamera)
**207** Inertialsensor zur Ermittlung der Fahrtrichtung und des fahrdynamischen Zustandes

### Figur 4: Logische Ausführungsform eines Systems

Die Abbildung zeigt eine mögliche logische Ausführungsform des Systems:
Ein ggf. redundanter Führungsrechner (303) übernimmt die elektronische Koordination des Zuges zur Lenkung der ersten Achse. Er gibt auch die Sollwerte für die Lage der virtuellen Schiene vor, auf der alle Folgeachsen fahren. Der Führungsrechner gibt Steuerbefehle an die elektronischen Steuerungen (304, 305), die z. B. als SPS, Embedded Computer oder Sicherheitssteuerung ausgeführt sind. Sensoren zur Führung des Zuges (insbesondere 205, 206, 207) können an den Führungsrechner oder an eine Steuerung (304,305) angeschlossen sein.

An diese Steuerungen (304, 305) können zentral vorhanden sein und die Steuerung aller Wagen von einer zentralen Steuerung aus übernehmen oder sie sind dezentral auf jedem Wagen separat angeordnet und per Bus oder Netzwerkkommunikation miteinander verbunden.

Ebenso können für unterschiedliche Aufgaben (Lenkung, Bremse, Traktion) gemeinsame oder unterschiedliche Steuerungen (304, 305) verwendet werden. Auch eine Kombination von gemeinsamer Steuerung z. B. für Lenkung und Bremse und einer weiteren separaten Steuerung für die Traktion ist möglich. Dies ist in der Abbildung durch die Aufteilung in zwei Steuerungsblöcke (304 und 305) symbolisch angedeutet.

Eine weitere Ausführungsform besteht darin, Teile wie z. B. die Traktion zentral zu steuern (z. B. durch eine zentrale Geschwindigkeitsvorgabe an einen Frequenzumrichter), während andere Funktionen (z. B. Lenkung und Bremse) dezentral mit separaten Steuerungen pro Wagen ausgeführt werden.

An die Steuerungen (304, 305) sind auch die Sensoren der Fahrzeuge (201-204 sowie 210-221) entweder über Feldbus und/oder direkt angeschlossen.

In einem automatisch unterstützen Fahrbetrieb nutzt der Führungsrechner die elektronische Karte (301) und die elektronischen Fahrwegdaten (302) zum Abgleich des geplanten Fahrweges mit der zu fahrenden Strecke in der realen Umgebung.

### Figur 5: Mögliche Systemverteilung auf dem Zug

Die Abbildung zeigt eine mögliche hardwaretechnische Systemverteilung mit folgenden Einzelelementen:
**303** Führungsrechner, ausgeführt z. B. als Embedded Rechner und angeordnet an einer beliebigen, vorzugsweise zentralen Stelle des Zuges. Dieser Rechner ist ggf. redundant vorhanden.
**401** - **403** Fahrzeugrechner, ausgeführt als Embedded Computer, Speicherprogrammierbare Steuerung (SPS) oder Sicherheitssteuerung sowie in beliebiger Kombination derartiger Rechentechnik. Entweder vorhanden auf jedem Fahrzeug (Wagen) (wie im Beispiel) oder zentral oder für mit jeweils einer Einheit für mehrere Fahrzeuge (Wagen)
**2xx** Siehe Erklärungen zu Fig. 2 und 3.
**100** - **102** Symbolische Darstellung der Einzelwagen im Zugverband zur Verdeutlichung der Zuordnung der Rechentechnik 401-403. Es können beliebig viele Wagen im Zugverband angeordnet sein. Die Gesamtzahl ist nicht auf drei Einheiten beschränkt. Auch kann die Art der Ausführung der Fahrzeuge beliebig sein (sh. weitere Beispiele in Abb. 1) oder in beliebiger Kombination verwendet werden.

### Figur 6

Teil A der Abbildung zeigt beispielhaft Elemente, die zum Ablauf des Verfahrens verwendet werden.
**501** stellt die virtuelle Schiene als Soll-Vorgabe für die Fahrspur des Fahrweges dar. Diese ist hier der Einfachheit halber als gerade Linie gezeichnet. Diese Schiene kann entweder als elektronische Karte auf einem der Zugrechner vorhanden sein oder es werden Streckenabschnitte definiert, wobei für jeden Streckenabschnitt z. B. ein Abstand zu einer Führungslinie, Wand etc. fest programmiert oder konfiguriert wird.
**502** sind Beispiele für externe Orientierungen zur Navigation, falls solche Elemente vorhanden sind. in diesem Fall als Beispiel eine seitliche Begrenzung des Fahrweges, wie z. B. Häuser, Tunnelwände, Leitplanken etc. Die Begrenzungen können über dieses Beispiel hinaus auch z. B. in der Mitte der Fahrspur, über der Fahrspur oder als einzelne, in gleichen oder ungleichen Abständen angeordnete Landmarken (z. B. Reflektoren, Masten o.ä.) ausgeführt sein. Wichtig für diese Elemente ist lediglich, dass diese externe Orientierungspunkte für die Navigation des Zuges und damit für die Lage der Fahrspur darstellen.
**503, 504, 505** sind Abstände zu den Führungselementen, in diesem Beispiel die seitlich am Fahrweg befindlichen festen Orientierungspunkte. Diese Abstände können beispielsweise mit seitlich am Fahrzeug angebrachten Sensoren (201 - 204) erfasst werden. Sind hochgenaue absolute Positionssensoren an allen Fahrzeugen angebracht (206) und wird eine elektronische Karte als Referenz verwendet, so können diese am Fahrweg angeordneten Orientierungspunkte zusammen mit den entsprechenden Sensoren naturgemäß entfallen.

Teil B der Abbildung illustriert die Vorbeifahrt an den Orientierungselementen in dieser beispielhaften Ausführungsvariante:
1. Vor dem Fahrzeug wird der Abstand zu den Führungselementen (500 - 502) sowie der momentane Winkel des Fahrzeuges im Verhältnis zu den Führungselementen mit den Frontsensoren elektronisch erfasst (205). Weitere Informationen über die Lage des Fahrzeuges im Verhältnis zu den Führungselementen ergibt sich aus der Sensorik 201 - 204).
2. Aus dem Vergleich der Sensorwerte mit den für diese Streckenposition oder den Fahrabschnitt definierten Werten sowie ggf. unter Einbeziehung weiterer Sensorik (206, 207 etc.) ergeben sich die Lenkausschläge der ersten Achse, welche notwendig sind, um in der Spur (auf der "virtuellen Schiene") zu bleiben.
3. Bei der Vorbeifahrt der ersten Achse an einem beliebigen Punkt der Fahrtstrecke (im Bild exemplarisch als ein einziger Punkt mit 701 bezeichnet) werden die Referenzabstände zu den Führungselementen gemessen. Diese stellt die Soll-Position an diesem Punkt der Fahrstrecke dar, der von allen Folgeachsen an dieser Stelle spurgenau überfahren werden muss.
4. Die Lenkbewegungen der Folgeachsen werden unter Zuhilfenahme der Messung der Fahrstrecke so gesteuert, dass jede Achse bei Vorbeifahrt der nächsten und aller weiteren Achsen (B.2, B.3, B.4) an diesem Punkt (701) genau in der Spur der ersten Achse läuft.
5. Diese Steuerung erfolgt mit Hilfe der Odometer (213) und der Lenkwinkelsensoren (220 ,221) sowie ggf. der Winkelsensoren in den Fahrzeugkupplungen (210, 211). Ungenauigkeiten, insbesondere bei größeren Zuglängen, werden durch die Führungssensorik (201-204) oder bei Absolutnavigation durch die individuellen Navigationseinheiten auf jedem Wagen (206) korrigiert, so dass die Spurabweichungen minimiert werden können.

### Abbildungen

- Figur 1:: Beispiele verschiedener Zugausführungen
- Figur 2:: Sensoren an den Folgefahrzeugen
- Figur 3:: Sensoren auf einem Führungsfahrzeug
- Figur 4:: Logischer Systemaufbau (Beispiel)
- Figur 5:: Rechentechnik - mögliche Systemverteilung
- Figur 6:: Zugführung entlang der elektronischen Fahrspur ("virtuelle Schiene")

## Patentansprüche

1. Verfahren zum spurtreuen Betrieb eines Fahrzeugverbandes bestehend aus zwei oder mehr mechanisch gekoppelten einzeln oder gemeinsam angetriebenen Fahrzeugen (100, 101, 102, 1nn; 110, 111, 11n), **dadurch gekennzeichnet, dass** jede Achse elektronisch gesteuert spurgenau der ersten Achse folgt, wobei die automatische Steuerung (303, 304, 305; 401 - 403 der Folgeachsen durch die Winkelstellungen der ersten Achse sowie der Winkel zwischen den Fahrzeugen (100, 101, 102, 1nn; 110, 111, 11n) zusammen mit der Fahrzeuggeometrie bestimmt wird, und wobei zur Steuerung der Folgeachsen eine elektronische Karte (301) verwendet wird, welche rechnerbasiert am Fahrzeug (100, 101, 102, 1nn; 110, 111, 11n) entlanggeführt wird, indem die Position der ersten Achse erfasst und die Lage der virtuellen Schiene definiert wird, unter Zuhilfenahme des Lenkwinkels (221) im Führungsrechner (303) die elektronische Karte (301) erstellt wird, die als virtuelle Schiene die Sollpositionen der Spur der Folgeachsen bestimmt.

2. Verfahren nach Anspruch 1, wobei zur automatischen Steuerung aller Achsen von Führungs- und Folgefahrzeugen (100, 101, 102, 1nn; 110, 111, 11n) absolute Positionssensorik (206) wie GPS oder Funkortung zum Abgleich mit einer Karte (301) verwendet wird.

3. Verfahren nach Anspruch 1, wobei die Genauigkeit der Führung der Folgeachsen durch am Fahrzeug (100, 101, 102, 1nn; 110, 111, 11n) angebrachte Sensoren (201, 202, 203, 204, 205, 206, 207) wie Ultraschall, Laser, Laserscanner, Radarscanner etc. in Kombination mit natürlichen oder künstlichen Führungselementen erhöht wird.

4. System zum spurtreuen Betrieb eines Fahrzeugverbandes bestehend aus zwei oder mehr mechanisch gekoppelten einzeln oder gemeinsam angetriebenen Fahrzeugen (100, 101, 102, 1nn; 110, 111, 11n), **dadurch gekennzeichnet, dass** jede Achse elektronisch gesteuert spurtreu der ersten Achse folgt, wobei die spurgenaue elektronische Steuerung der Folgeachsen durch die Winkelstellungen der ersten Achse sowie durch die Winkel zwischen den Fahrzeugen (100, 101, 102, 1nn; 110, 111, 11n) zusammen mit der Fahrzeuggeometrie bestimmt wird, und wobei zur Steuerung der Folgeachsen eine elektronische Karte (301) verwendet wird, welche in einem oder verteilt über mehrere Rechner (303, 304, 305; 401 - 403) am Fahrzeug (100, 101, 102, 1nn; 110, 111, 11n) entlanggeführt wird, indem die Position der ersten Achse erfasst und die Lage der virtuellen Schiene definiert wird, unter Zuhilfenahme des Lenkwinkels (221) im Führungsrechner (303) die elektronische Karte (301) erstellt wird, die als virtuelle Schiene und damit die Sollpositionen der Spur der Folgeachsen bestimmt.

5. System nach Anspruch 4, wobei die Position des Fahrzeugverbandes oder einzelner Fahrzeuge (100, 101, 102, 1nn; 110, 111, 11n) durch elektronische Sensoren (201, 202, 203, 204, 205, 206, 207), vorzugsweise Laserscanner, Radarscanner, GPS, D-GPS oder Funknavigation, mit der Soll-Position der Fahrspur abgeglichen wird.

6. System nach Anspruch 4, wobei die Steuerung der Folgefahrzeuge (101, 102, 1nn; 111, 11n) und der Führungsachse durch ein zentrales Steuerungssystem (303, 304, 305; 401 - 403) oder durch elektronisch vernetzte Einzelsteuerungen (303, 304, 305; 401 - 403) erfolgt.

7. System nach Anspruch 4, wobei die Genauigkeit der Führung der Folgeachsen durch seitlich am Fahrzeug (100, 101, 102, 1nn; 110, 111, 11n) angebrachte Sensoren (201, 202, 203, 204, 205, 206, 207) erhöht wird.

8. System nach Anspruch 4, wobei die Regelung der Fahrgeschwindigkeit der Einzelantriebe der Wagen (100, 101, 102, 1nn; 110, 111, 11n) über den Auszug oder die Kräfte eines Puffers zwischen den Wagen (100, 101, 102, 1nn; 110, 111, 11n) vorgenommen wird.

## Claims

1. Method for the operation of a vehicle combination consisting of two or more mechanically-coupled, individually or collectively-driven vehicles (100, 101, 102, 1nn; 110, 111, 11n) in such a way that a correct track course is followed, **characterised in that** each axle follows exactly the track course of the first axle, in an electronically controlled manner, wherein the automatic control (303, 304, 305; 401 - 403) of the secondary axles is determined by the angular positions of the first axle and the angles between the vehicles (100, 101, 102, Inn; 110, 111, 11n) together with the vehicle geometry and wherein in order to control the secondary axles an electronic map (301) is used which is guided along the vehicle (100, 101, 102, 1nn; 110, 111, 11n) in a computer-controlled manner, by the position of the first axle being detected and the position of the virtual rail being defined, the electronic map (301) is created with the help of the steering angle (221) in the guide computer (303), which determines the target positions of the track of the secondary axles as the virtual rail.

2. Method according to claim 1, wherein in order to automatically control all axles of guide and secondary vehicles (100, 101, 102, 1nn; 110, 111, 11n) absolute position sensors (206) such as GPS or radiolocation are used to compare with a map (301).

3. Method according to claim 1, wherein the accuracy of the guidance of the secondary axles by sensors (201, 202, 203, 204, 205, 206, 207), such as ultrasound, laser, laser scanner, radar scanner, etc. that are attached to the vehicle (100, 101, 102, 1nn; 110, 111, 11n) is increased in combination with natural or artificial guide elements.

4. System for the operation of a vehicle combination consisting of two or more mechanically-coupled, individually or collectively-driven vehicles (100, 101, 102, 1nn; 110, 111, 11n) in such a way that a correct track course is followed, **characterised in that** each axle follows the track course of the first axle, in an electronically controlled manner, wherein the electronic control of the secondary axles for exactly following the track course is determined by the angular positions of the first axle and by the angles between the vehicles (100, 101, 102, 1nn; 110, 111, 11n) together with the vehicle geometry and wherein in order to control the secondary axles an electronic map (301) is used which is guided along the vehicle (100, 101, 102, 1nn; 110, 111, 11n) in one computer or distributed over a plurality of said computers (303, 304, 305; 401 - 403), by the position of the first axle being detected and the position of the virtual rail being defined, the electronic map (301) is created with the help of the steering angle (221) in the guide computer (303), which determines as the virtual rail and therefore the target positions of the track of the secondary axles.

5. System according to claim 4, wherein the position of the vehicle combination or individual vehicles (100, 101, 102, 1nn; 110, 111, 11n) is compared with the target position of the track by electronic sensors (201, 202, 203, 204, 205, 206, 207), preferably laser scanner, radar scanner, GPS, D-GPS or radio navigation.

6. System according to claim 4, wherein the control of the secondary vehicles (101, 102, 1nn; 111, 11n) and the guide axle is carried out by a central control system (303, 304, 305; 401 - 403) or by electronically-linked individual controllers (303, 304, 305; 401 - 403).

7. System according to claim 4, wherein the accuracy of the guidance of the secondary axles is increased by sensors (201, 202, 203, 204, 205, 206, 207) laterally attached to the vehicle (100, 101, 102, 1nn; 110, 111, 11n).

8. System according to claim 4, wherein the regulation of the driving speed of the individual drives of the carriages (100, 101, 102, 1nn; 110, 111, 11n) is carried out via the extension or the forces of a buffer between the carriages (100, 101, 102, 1nn; 110, 111, 11n) .

## Revendications

1. Procédé destiné à faire fonctionner de manière fidèle à une trajectoire une rame de véhicules composée de deux véhicules ou plus (100, 101, 102, 1nn ; 110, 111, 11n) accouplés mécaniquement et entraînés individuellement ou conjointement, **caractérisé en ce que** chaque essieu suit le premier essieu de manière fidèle à la trajectoire et commandée électroniquement, dans lequel la commande automatique (303, 304, 305 ; 401 à 403) des essieux ultérieurs est définie par les positions angulaires du premier essieu ainsi que l'angle entre les véhicules (100, 101, 102, 1nn ; 110, 111, 11n) conjointement avec la géométrie des véhicules, et dans lequel pour commander les essieux ultérieurs une carte électronique (301) est utilisée et est guidée dans le sens de la longueur sur la base d'un ordinateur au niveau du véhicule (100, 101, 102, 1nn ; 110, 111, 11n) en enregistrant la position du premier essieu et, en définissant la position du rail virtuel à l'aide de l'angle de braquage (221) dans l'ordinateur de guidage (303), la carte électronique (301) est établie et définit les positions de consigne de la trajectoire des essieux ultérieurs sous la forme d'un rail virtuel.

2. Procédé selon la revendication 1, dans lequel pour la commande automatique de tous les essieux du véhicule de guidage et des véhicules ultérieurs (100, 101, 102, 1nn ; 110, 111, 11n) des capteurs de positions absolues (206) tels le GPS ou la radiolocalisation sont utilisés pour la synchronisation avec une carte (301).

3. Procédé selon la revendication 1, dans lequel la précision du guidage des essieux ultérieurs est augmentée par des capteurs (201, 202, 203, 204, 205, 206, 207) appliqués au niveau du véhicule (100, 101, 102, 1nn ; 110, 111, 11n), tels l'ultrason, le laser, le scanner laser, le radar laser, etc., en combinaison avec des éléments de guidage naturels ou artificiels.

4. Système destiné à faire fonctionner de manière fidèle à une trajectoire une rame de véhicules composée de deux véhicules ou plus (100, 101, 102, 1nn ; 110, 111, 11n) accouplés mécaniquement et entraînés individuellement ou conjointement, **caractérisé en ce que** chaque essieu suit le premier essieu de manière fidèle à la trajectoire et commandée électroniquement, dans lequel la commande électronique de manière fidèle à la trajectoire des essieux ultérieurs est définie par les positions angulaires du premier essieu ainsi que par l'angle entre les véhicules (100, 101, 102, 1nn ; 110, 111, 11n) conjointement avec la géométrie des véhicules, et dans lequel pour commander les essieux ultérieurs une carte électronique (301) est utilisée et est guidée dans le sens de la longueur dans un ordinateur ou distribuée sur plusieurs ordinateurs (303, 304, 305 ; 401 à 403) au niveau du véhicule (100, 101, 102, 1nn ; 110, 111, 11n), en enregistrant la position du premier essieu et en définissant la position du rail virtuel, à l'aide de l'angle de braquage (221) dans l'ordinateur de guidage (303) la carte électronique (301) est établie et définit les positions de consigne de la trajectoire des essieux ultérieurs sous la forme d'un rail virtuel.

5. Système selon la revendication 4, dans lequel la position de la rame de véhicules ou de véhicules individuels (100, 101, 102, 1nn ; 110, 111, 11n) est synchronisée avec la position de consigne de la voie de circulation par des capteurs électroniques (201, 202, 203, 204, 205, 206, 207), de préférence un scanner laser, un scanner radar, un GPS, un D-GPS ou une radionavigation.

6. Système selon la revendication 4, dans lequel la commande des véhicules ultérieurs (101, 102, 1nn ; 111, 11n) et de l'essieu de guidage se fait par un système de commande central (303, 304, 305 ; 401 à 403) ou par des commandes individuelles (303, 304, 305 ; 401 à 403) interconnectées de manière électronique.

7. Système selon la revendication 4, dans lequel la précision du guidage des essieux ultérieurs est augmentée par des capteurs (201, 202, 203, 204, 205, 206, 207) appliqués latéralement au niveau du véhicule (100, 101, 102, 1nn ; 110, 111, 11n).

8. Système selon la revendication 4, dans lequel la régulation de la vitesse de conduite des entraînements individuels des voitures (100, 101, 102, 1nn ; 110, 111, 11n) est effectuée par le biais d'une extraction ou des forces d'un amortisseur entre les voitures (100, 101, 102, 1nn ; 110, 111, 11n).
